# EUROPEAN PATENT APPLICATION

(11) **EP 4 325 949 A1**
(43) Date of publication of application: **21.02.2024**
(21) Application number: 22190780.1
(22) Date of filing: 17.08.2022
(51) Int. Cl.: H04W 56/00

(54) **A METHOD FOR SYNCHRONIZING NODES OF A CELLULAR NETWORK**

(71) Applicant: Deutsche Telekom AG, 53113 Bonn (DE)
(72) Inventor: IMLAU, Helmut, 27299 Langwedel (DE); COLOM IKUNO, Josep, 2100 Korneuburg (AT)
(74) Representative: RDL Patentanwälte PartG mbB

(57) **Abstract**

A method for synchronizing nodes of a cellular network wherein a base transceiver station, BTS, as first node of a cellular network wirelessly transmits a clock information to a terminal device connected to the cellular network as a second node of the cellular network according to a first communication protocol, and a computer program product.

## Description

The invention relates to a method for synchronizing nodes of a cellular network wherein a base transceiver station, BTS, as first node of a cellular network wirelessly transmits a clock information to a terminal device connected to the cellular network as a second node of the cellular network according to a first communication protocol. The invention further relates to a computer program product.

The method allows for synchronizing a terminal device, i.e. user equipment, UE, connected to a cellular network with the cellular network. Synchronization is achieved by distributing a clock information, e.g. a UTC timestamp, within the cellular network, i.e. transmitting the clock information between nodes of the cellular network.

The cellular network generally comprises a plurality of BTS each BTS being a node of the cellular network and establishing a cell of the cellular network. The cell comprises a portion of the earth's surface allowing a terminal device with a radio interface to wirelessly connect to the BTS, i.e. connect to the cellular network "over the air". Terminal devices connected to a BTS of the cellular network are also considered nodes of the cellular network herein.

Of course, the BTS needs to know a time in order to distribute the clock information to a connected terminal device. The BTS may receive the clock information from a global navigation satellite system, GNSS. The BTS may receive the clock information also from a third node of the cellular network, e.g. according to the precision time protocol, PTP. The BTS usually executes a PTP client for receiving the clock information from the third node.

It is noted that the term "protocol" shall be understood in the usual way, i.e. a protocol specifies a plurality of rules allowing two or more nodes to transmit information between each other via a varying physical quantity. The protocol may specify the rules, syntax, semantics and/or synchronicity of the transmitted information. Different protocols may relate to different network layers and/or different networking planes.

The BTS may wirelessly transmit the received clock information to the terminal device according to a communication protocol different from PTP, e.g. according to a 5G communication protocol as specified by the 3GPP partnership project, 3GPP.

The BTS may additionally provide a clock accuracy information. However, the 5G communication protocol actually does not allow the BTS for transmitting the clock accuracy information to the terminal device. As a consequence, the terminal device is prevented from taking into account a precision of the synchronization.

It is therefore an object of the invention to suggest a method for synchronizing nodes of a cellular network which efficiently allows the BTS for wirelessly transmitting a clock accuracy information to a terminal device and allows the terminal device for efficiently receiving the clock accuracy information. Another object of the invention is to provide a computer program product.

A first aspect of the invention is a method for synchronizing nodes of a cellular network wherein a base transceiver station, BTS, as first node of a cellular network wirelessly transmits a clock information to a terminal device connected to the cellular network as a second node of the cellular network according to a first communication protocol. The transmitted clock information synchronizes the terminal device with the BTS. The first communication protocol may be a 5G communication protocol specified by 3GPP, particularly the access stratum, AS, layer of the radio access network, RAN.

According to the invention, the BTS transmits a clock accuracy information to the terminal device according to the first communication protocol, the clock accuracy information specified by a second communication protocol different from the first communication protocol. In other words, the first communication protocol is used for additionally transmitting the clock accuracy information although the clock accuracy information is specified by a second communication protocol and provided in accordance with the second communication protocol.

Thus, the transmission of the clock accuracy information relies on an available single communication protocol despite the different communication protocol defining the clock accuracy information to be transmitted. On the one hand, there is no need of the wireless connection for supporting the second communication protocol. On the other hand, no additional communication protocol has to be specified for transmitting the clock accuracy information. Accordingly, the method may be implemented very efficiently.

In an embodiment, a network layer of the first communication protocol is different from a network layer of the second communication protocol and/or wherein a networking plane of the first communication protocol is different from a networking plane of the second communication protocol. The network layers are specified by the open systems interconnection, OSI, model. For instance, the first communication protocol applies to layer 3, the so-called network layer, and the second communication protocol applies to layer 7, the so-called application layer. The networking planes are components of an architecture of cellular networks and comprise a control plane and a user plane, the latter also called data plane, forwarding plane, carrier plane or bearer plane. The control plane comprises a management plane as a subset.

In typical cellular networks, the user plane supports transmission of application data, e.g. internet data, and requires a protocol data unit, PDU, session which is established in the control plane which supports signaling traffic. While the control plane is independent from the user plane, the user plane depends on the control plane. Control plane transmissions between the BTS and the terminal device take place according to access stratum layer protocols. Control plane transmissions between a core server of the cellular network and the terminal device take place according to non-access stratum, NAS, layer protocols.

Preferably, each of the clock information and the clock accuracy information is transmitted according to the radio resource control, RRC, protocol as the first communication protocol and the clock accuracy information is specified by the precision time protocol, PTP, as the second communication protocol. Using the PTP clock accuracy information avoids a redundant definition and a transformation between different definitions of the clock accuracy information. Apart from that, both the BTS and the terminal device usually are PTP capable.

The BTS may transmit the PTP clock accuracy information as a part of an RRC message and/or an RRC information specified by the RRC protocol. The RRC message and the RRC information are classes of data entities specified by the RRC protocol. RRC messages and/or RRC informations are related to the AS layer.

Preferably, the BTS transmits the PTP clock accuracy information as a part of a master information block, MIB, specified by the RRC protocol or as a part of a system information block, SIB, specified by the RRC protocol. Transmission of the PTP clock accuracy information relies on a MIB or SIB specified by the RRC protocol, 3GPP TS 38.331 6.2.2 or 3GPP TS 38.331 6.3.1. SIBs are transmitted periodically or in response to a request from the terminal device.

The BTS may transmit the PTP clock accuracy information as a part of a SIB1 or as a part of a SIB9 specified by the RRC protocol. The SIB1 is specified by 3GPP TS 38.331 6.2.2. The SIB9 is specified by 3GPP TS 38.331, 6.3.2. It is noted that the clock information is transferred in the SIB9.

In an embodiment, the BTS transmits the PTP clock accuracy information via a broadcast channel, BCH, or via a download shared channel, DL-SCH. Advantageously, a PTP client of the BTS receives a PTP announce message from a third node of the cellular network and transmits a content of the received PTP announce message as the PTP clock accuracy information. The PTP announce message is specified by IEEE 1588 and comprises quality information concerning the clock. The third node may be configured as a core server of the cellular network. Of course, the BTS may receive a different clock accuracy information and transform the different clock accuracy information into a PTP clock accuracy information.

A clockClass value, a clockAccuracy value and/or an offsetScaledLogVariance value may be transmitted as the content. The clockClass value specifies a state of a local clock. The clockAccuracy value specifies an estimated time error. The offsetScaledLogVariance value specifies a variance of the clock information.

A PTP master executed by the terminal device may receive the PTP clock accuracy information. The PTP master may take into account a precision of the synchronization or forward the PTP clock accuracy information to a PTP client. Of course, the PTP clock accuracy information may alternatively be forwarded according to another specification different from PTP.

In a favorable embodiment, a PTP client of a user application executed by the terminal device receives the PTP clock accuracy information from the PTP master. The user application may take into account a precision of the synchronization. Alternatively, a PTP client of another device connected to the terminal device or a PTP client of a user application executed by the other device may receive the PTP clock accuracy information. The received PTP clock accuracy information may be used for raising an alert or enabling the terminal device or the other device to select an optimal time source.

The terminal device or a user application executed by the terminal device may execute a best master clock algorithm, BMCA, dependent of the received PTP clock accuracy information. The BMCA is a time source selection algorithm specified by IEEE 1588 and allows the terminal device for selecting a PTP grandmaster, GM, i.e. a timing reference, dependent of the provided accuracy of the clock information.

The clock accuracy information is preferably transmitted once a second. Once a second is a transmission rate being sufficient for the clock accuracy information while not causing a heavy load for the wireless connection.

In an embodiment, a gNodeB transmits the clock accuracy information as the BTS. The gNodeB is a 5G base station.

A second aspect of the invention is a computer program product, comprising a computer-readable medium storing a program code. The computer-readable medium comprises a digital storage unit, e.g. a USB stick, a digital versatile disk, DVD, a hard disk, a random access memory, RAN, chip, an internet cloud and the like.

According to the invention, the program code causing a computing device to participate in a method according to the invention as a BTS or as a terminal device when being executed by a processor of the computing device. The computing device reads the program code stored by the computer-readable medium and executes the read program code. The read program code enables the computing device to carry out the method either as the BTS or as the terminal device. The computing device may be configured as a server hardware or a smartphone and the like, respectively.

It is an essential advantage of the invented method that the method may be implemented very efficiently. On the one hand, there is no need of the wireless connection for supporting the second communication protocol. On the other hand, no additional communication protocol has to be specified for transmitting the clock accuracy information. Apart from that, an existing clock accuracy definition may be used and transformations between different definitions of clock accuracy information are avoided.

Further advantages and configurations of the invention become apparent from the following description and the enclosed drawings.

It shall be understood that the features described previously and to be described subsequently may be used not only in the indicated combinations but also in different combinations or on their own without leaving the scope of the present invention.

The invention is described in detail by means of an exemplary embodiment and with reference to the drawings. Like components are indicated by like reference numerals throughout the drawings.

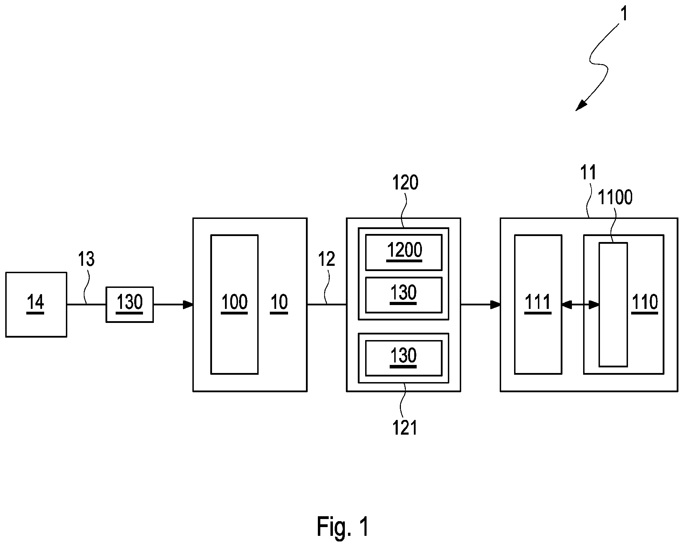

- Fig. 1: schematically shows a partial diagram of a cellular network synchronized by a method according to the invention.

Fig. 1 schematically shows a partial diagram of a cellular network 1 synchronized by a method according to the invention. The cellular network 1 comprises a base transceiver station, BTS, 10 as a first node of the cellular network 1. The BTS 10 may be configured as a gNodeB specified by 5G standard. The BTS 10 may comprise a precision time protocol, PTP, client 100.

The cellular network 1 further comprises a terminal device 11 connected to the cellular network 1 as a second node of the cellular network 1. The terminal device 11 may comprise a PTP master 111 and a user application 110. The user application 110 may comprise a PTP client 1100.

Each of the BTS 10 and the terminal device 11 may be respectively implemented by means of a computing device and a computer program product. The computer program product comprises a computer-readable medium storing a program code causing the computing device to participate in a method according to the invention as a BTS 10 and as a terminal device 11, respectively, when being executed by a processor of the computing device.

The nodes of the cellular network 1 are synchronized by carrying out an inventive method as follows.

The BTS 10 wirelessly transmits a clock information 1200 to the terminal device 11 connected to the cellular network 1 according to a first communication protocol.

The BTS 10 further transmits a clock accuracy information to the terminal device 11 according to the first communication protocol. The gNodeB preferably transmits the clock accuracy information as the BTS 10. The clock accuracy information is preferably transmitted once a second.

The clock accuracy information is specified by a second communication protocol different from the first communication protocol. Particularly, a network layer of the first communication protocol is different from a network layer of the second communication protocol and/or a networking plane of the first communication protocol is different from a networking plane of the second communication protocol.

Each of the clock information 1200 and the clock accuracy information may be transmitted according to the radio resource control, RRC, protocol 12 as the first communication protocol. The BTS 10 preferably transmits the clock accuracy information 130 as a part of SIB, an RRC message and/or an RRC information specified by the RRC protocol 12.

The clock accuracy information may be specified by the precision time protocol, PTP, 13 as the second communication protocol. The BTS 10 preferably transmits the PTP clock accuracy information 130 as a part of a master information block, MIB, 120 specified by the RRC protocol 12 or as a part of a system information block, SIB, specified by the RRC protocol 12.

The BTS 10 may transmit the PTP clock accuracy information 130 as a part of of a SIB1 121 or as a part of a SIB9 121 specified by the RRC protocol 12. The BTS 10 may transmit the PTP clock accuracy information 130 via a broadcast channel, BCH, or via a download shared channel, DL-SCH.

The PTP client 100 of the BTS 10 may receive a PTP announce message from a third node 14 of the cellular network 1 and transmit a content of the received PTP announce message as the clock accuracy information. A clockClass value, a clockAccuracy value and/or an offsetScaledLogVariance value are preferably transmitted as the content.

The PTP master 111 executed by the terminal device 11 may receive the PTP clock accuracy information 130. The PTP client 1100 of the user application 110 executed by the terminal device 11 may receive the PTP clock accuracy information 130 from the PTP master 111. The terminal device 11 or a user application 110 executed by the terminal device 11 preferably executes a best master clock algorithm, BMCA, dependent of the received PTP clock accuracy information 130.

### Reference Numerals

- 1: cellular network
- 10: BTS
- 100: PTP client
- 11: terminal device
- 110: user application
- 1100: PTP client
- 111: PTP master
- 12: RRC protocol
- 120: MIB
- 1200: clock information
- 121: SIB
- 13: PTP
- 130: PTP clock accuracy information
- 14: third node

## Claims

1. A method for synchronizing nodes of a cellular network (1) wherein
- a base transceiver station, BTS, (10) as first node of a cellular network (1) wirelessly transmits a clock information (1200) to a terminal device (11) connected to the cellular network (1) as a second node of the cellular network (1) according to a first communication protocol;
- the BTS (10) transmits a clock accuracy information to the terminal device (11) according to the first communication protocol, the clock accuracy information specified by a second communication protocol different from the first communication protocol.

2. The method according to claim 1, wherein a network layer of the first communication protocol is different from a network layer of the second communication protocol and/or wherein a networking plane of the first communication protocol is different from a networking plane of the second communication protocol.

3. The method according to claim 1 or 2, wherein each of the clock information (1200) and the clock accuracy information is transmitted according to the radio resource control, RRC, protocol (12) as the first communication protocol and the clock accuracy information is specified by the precision time protocol, PTP, (13) as the second communication protocol.

4. The method according to claim 3, wherein the BTS (10) transmits the PTP clock accuracy information (130) as a part of an RRC message and/or an RRC information specified by the RRC protocol (12).

5. The method according to claim 3 or 4, wherein the BTS (10) transmits the PTP clock accuracy information (130) as a part of a master information block, MIB, (120) specified by the RRC protocol (12) or as a part of a system information block, SIB, (121) specified by the RRC protocol (12).

6. The method according to claim 5, wherein the BTS (10) transmits the PTP clock accuracy information (130) as a part of a SIB1 (121) or as a part of a SIB9 (121) specified by the RRC protocol (12).

7. The method according to claim 5 or 6, wherein the BTS (10) transmits the PTP clock accuracy information (130) via a broadcast channel, BCH, or via a download shared channel, DL-SCH.

8. The method according to one of claims 3 to 7, wherein a PTP client (100) of the BTS (10) receives a PTP announce message from a third node (14) of the cellular network (1) and transmits a content of the received PTP announce message as the clock accuracy information.

9. The method according to claim 8, wherein a clockClass value, a clockAccuracy value and/or an offsetScaledLogVariance value are transmitted as the content.

10. The method according to one of claims 3 to 9, wherein a PTP master (111) executed by the terminal device (11) receives the PTP clock accuracy information (130).

11. The method according to claim 10, wherein a PTP client (1100) of a user application (110) executed by the terminal device (11) receives the PTP clock accuracy information (130) from the PTP master (111).

12. The method according to one of claims 3 to 11, wherein the terminal device (11) or a user application (110) executed by the terminal device (11) executes a best master clock algorithm, BMCA, dependent of the received PTP clock accuracy information (130).

13. The method according to one of claims 1 to 12, wherein the clock accuracy information is transmitted once a second.

14. The method according to one of claims 1 to 13, wherein a gNodeB transmits the clock accuracy information as the BTS (10).

15. A computer program product, comprising a computer-readable medium storing a program code, the program code causing a computing device to participate in a method according to one of claims 1 to 14 as a BTS (10) or as a terminal device (11) when being executed by a processor of the computing device.

## Amended claims

### Amended claims in accordance with Rule 137(2) EPC.

1. A method for synchronizing nodes of a cellular network (1) wherein
- a base transceiver station, BTS, (10) as first node of a cellular network (1) wirelessly transmits a clock information (1200) to a terminal device (11) connected to the cellular network (1) as a second node of the cellular network (1) according to a first communication protocol;
- the BTS (10) transmits a clock accuracy information to the terminal device (11) according to the first communication protocol, the clock accuracy information specified by a second communication protocol different from the first communication protocol.

2. The method according to claim 1, wherein a network layer of the first communication protocol is different from a network layer of the second communication protocol and/or wherein a networking plane of the first communication protocol is different from a networking plane of the second communication protocol.

3. The method according to claim 1 or 2, wherein each of the clock information (1200) and the clock accuracy information is transmitted according to the radio resource control, RRC, protocol (12) as the first communication protocol and the clock accuracy information is specified by the precision time protocol, PTP, (13) as the second communication protocol.

4. The method according to claim 3, wherein the BTS (10) transmits the PTP clock accuracy information (130) as a part of an RRC message and/or an RRC information specified by the RRC protocol (12).

5. The method according to claim 3 or 4, wherein the BTS (10) transmits the PTP clock accuracy information (130) as a part of a master information block, MIB, (120) specified by the RRC protocol (12) or as a part of a system information block, SIB, (121) specified by the RRC protocol (12).

6. The method according to claim 5, wherein the BTS (10) transmits the PTP clock accuracy information (130) as a part of a SIB1 (121) or as a part of a SIB9 (121) specified by the RRC protocol (12).

7. The method according to claim 5 or 6, wherein the BTS (10) transmits the PTP clock accuracy information (130) via a broadcast channel, BCH, or via a download shared channel, DL-SCH.

8. The method according to one of claims 3 to 7, wherein a PTP client (100) of the BTS (10) receives a PTP announce message from a third node (14) of the cellular network (1) and transmits a content of the received PTP announce message as the clock accuracy information.

9. The method according to claim 8, wherein a clockClass value, a clock-Accuracy value and/or an offsetScaledLogVariance value are transmitted as the content.

10. The method according to one of claims 3 to 9, wherein a PTP master (111) executed by the terminal device (11) receives the PTP clock accuracy information (130).

11. The method according to claim 10, wherein a PTP client (1100) of a user application (110) executed by the terminal device (11) receives the PTP clock accuracy information (130) from the PTP master (111).

12. The method according to one of claims 3 to 11, wherein the terminal device (11) or a user application (110) executed by the terminal device (11) executes a best master clock algorithm, BMCA, dependent of the received PTP clock accuracy information (130).

13. The method according to one of claims 1 to 12, wherein the clock accuracy information is transmitted once a second.

14. The method according to one of claims 1 to 13, wherein a gNodeB transmits the clock accuracy information as the BTS (10).

15. A computer program product, comprising a computer-readable medium storing a program code, the program code causing a computing device to participate in a method according to one of claims 1 to 14 as a BTS (10) when being executed by a processor of the computing device.
